# EUROPÄISCHE PATENTANMELDUNG

(11) **EP 2 014 397 A1**
(43) Veröffentlichungstag der Anmeldung: **14.01.2009**
(21) Anmeldenummer: 08104035.4
(22) Anmeldetag: 20.05.2008
(51) Int. Cl.: B23B 51/00

(54) **Profilierungselement**

(30) Priorität: 12.07.2007 DE 102007000374
(71) Anmelder: HILTI Aktiengesellschaft, 9494 Schaan (LI)
(72) Erfinder: Ginter, Herbert, 87600, Kaufbeuren (DE)
(74) Vertreter: Wildi, Roland

(57) **Zusammenfassung**

Ein Profilierungselement (11) zur Profilierung einer Bohrlochwandung weist einen Schaft (12) auf, der als ein radial abragendes, gewindefurchendes Element (13) ein Aussengewinde sowie an einem ersten Ende (14) eine Drehmitnahme (15) für ein Setzwerkzeug und ein dem ersten Ende (14) gegenüberliegendes zweites Ende (16) aufweist, an dem ein Reinigungselement (21) vorgesehen ist.

## Beschreibung

Die Erfindung betrifft ein Profilierungselement zur Profilierung einer Bohrlochwandung mit einem Schaft, der wenigstens ein radial abragendes, gewindefurchendes Element sowie an einem ersten Ende eine Drehmitnahme für ein Setzwerkzeug und ein dem ersten Ende gegenüberliegendes zweites Ende aufweist. Weiter betrifft die Erfindung ein Verfahren zum Setzen eines chemisch verankerten Befestigungselementes mit einem derartigen Profilierungselement.

Zur chemischen Verankerung eines Befestigungselementes, wie einer Ankerstange, einer Gewindestange, einer Gewindehülse oder eines Bewehrungseisens, in einem Verankerungsgrund wird ein Bohrloch erstellt, dieses mit einer aushärtbaren Masse, z. B. einer zweikomponentigen Mörtelmasse, befüllt und das Befestigungselement in das befüllte Bohrloch gesetzt. Nach dem Aushärten der Masse weist das Befestigungselement hohe Lastwerte auf.

Die Kraftübertragung zwischen dem Befestigungselement und dem Verankerungsuntergrund erfolgt über die ausgehärtete Masse. Das Befestigungselement weist dazu eine Profilierung auf, die einen guten Formschluss zwischen dem Befestigungselement und der ausgehärteten Masse gewährleistet. Der Verbund zwischen der ausgehärteten Masse und dem Verankerungsgrund erfolgt zu einem Teil über einen Formschluss infolge der Oberflächenrauhigkeit der Bohrlochwandung und zu einem wesentlich grösseren Teil über die Adhäsion der ausgehärteten Masse mit der Bohrlochwandung.

Die Adhäsion der ausgehärteten Masse an der Bohrlochwandung hängt vor allem vom Grad der Bohrlochreinigung, wie auch von der im Bohrloch vorhandenen Feuchtigkeit beziehungsweise Wasser ab.

Um den Anteil des Formschlusses zwischen der ausgehärteten Masse und der Bohrlochwandung zu erhöhen, ist aus der DE 37 18 158 C2 ein Profilierungselement mit einem Schaft bekannt, der radial abragende, stiftförmige Abtragswerkzeugeinsätze als ein gewindefurchendes Element sowie an einem ersten Ende eine Drehmitnahme für ein Setzwerkzeug und ein dem ersten Ende gegenüberliegendes zweites Ende aufweist. Beim Eintreiben des Profilierungselementes in das Bohrloch wird ein spiralförmig verlaufender Hinterschnitt in der Bohrlochwandung erzeugt, wodurch der Anteil des Formschlusses zwischen der ausgehärteten Masse und der Bohrlochwandung massgeblich erhöht wird. Nach der Erstellung des Hinterschnitts wird das Profilierungselement aus dem Bohrloch entfernt.

Nachteilig an der bekannten Lösung ist, dass für die gewünschte Adhäsion zwischen der ausgehärteten Masse und der Bohrlochwandung das Bohrloch weiterhin gereinigt werden muss.

Um das Bohrloch vor der Befüllung mit der aushärtbaren Masse zu reinigen, wird dieses z. B. mit einer Pumpe ausgeblasen, was jedoch zu einer unerwünschten Staubbelastung ausserhalb des Bohrlochs führt. Um diesen Nachteil zu umgehen, ist beispielsweise aus der DE 197 57 424 A1 eine Bohrlochreinigungsvorrichtung mit einem Hohlschaft und radial davon abragenden Bürstenorganen bekannt, bei der das anfallende Bohrmehl durch den Hohlschaft abgesaugt wird. Nachteilig an der bekannten Lösung ist, dass diese Art der Bohrlochreinigung zusätzliche Arbeitsschritte erfordert.

Aufgabe der Erfindung ist es, ein Profilierungselement sowie ein Verfahren zum Setzen eines chemisch verankerbaren Befestigungselementes zu schaffen, das den Aufwand zum Setzen des chemisch verankerten Befestigungselementes reduziert und dabei die Adhäsion sowie den Formschluss zwischen der ausgehärteten Masse und der Bohrlochwandung gewährleistet.

Die Aufgabe ist durch die Merkmale der unabhängigen Ansprüche gelöst. Vorteilhafte Weiterbildungen sind in den Unteransprüchen dargelegt.

Gemäss der Erfindung ist ein Reinigungselement an einem der Enden des Schafts des Profilierungselementes vorgesehen. Beim Eintreiben des Profilierungselementes wird an der Bohrlochwandung anhaftendes Bohrmehl sowie im Bohrloch befindliches Bohrmehl und Bohrklein vor dem Reinigungselement in Richtung des Bohrlochgrundes hergeschoben. In einem Arbeitsschritt erfolgen die Erstellung der Hinterschneidung in der Bohrlochwandung und die Reinigung des Bohrlochs. Vorteilhaft wird das Profilierungselement soweit in das Bohrloch eingetrieben, dass das vorgeschobene Bohrmehl und Bohrklein im Bereich des Bohrlochgrundes komprimiert wird.

In einer vorteilhaften Ausführungsform ist das Reinigungselement am ersten Ende des Schafts vorgesehen, so dass das beim Eintreiben des Profilierungselementes zusätzlich anfallende Bohrmehl und Bohrklein ebenfalls von dem Reinigungselement in Richtung des Bohrlochgrundes geschoben wird.

Das Profilierungselement wird beispielsweise mit einem elektrisch oder pneumatisch betriebenen Setzwerkzeug in das Bohrloch eingetrieben, wobei die Kraftübertragung von dem Setzwerkzeug auf das Profilierungselement direkt oder indirekt über einen Setzadapter erfolgt. Die Drehmitnahme weist vorteilhaft eine Mehrkantausbildung oder eine Torx-Aufnahme zur Schaffung einer leicht lösbaren, drehmomentübertragenden Kupplung auf. Besonders vorteilhaft ist diese Drehmitnahme in einer Sacklochbohrung am ersten Ende des Schafts angeordnet, wodurch das Profilierungselement eine kurze Gesamtlänge aufweist. Zudem lässt sich das Setzwerkzeug beziehungsweise der Setzadapter bei einer Drehmitnahme in einem Sackloch einfach mit dem Profilierungselement kuppeln und wieder entkuppeln.

Die Länge des Schafts entspricht etwa dem 0.4- bis 1.6-fachen, vorteilhaft dem 0.9- bis 1.1-fachen, des Kerndurchmessers des Schafts. Der Kerndurchmesser des Schafts entspricht vorteilhaft dem 0.9- bis 1.0-fachen des Nenndurchmessers des Bohrlochs.

Das radial vom Schaft abragende, gewindefurchende Element ist vorteilhaft ein gewindefurchendes Aussengewinde, das einstückig am Schaft ausgebildet ist. Der Aussendurchmesser des Aussengewindes entspricht vorteilhaft etwa dem 1.1- bis 1.3-fachen des Nenndurchmessers des Bohrlochs. Für eine verbesserte furchende Wirkung des Aussengewindes weist dieses vorteilhaft quer zum Gewindeverlauf verlaufende Nuten oder einzelne in das Aussengewinde eingesetzte Schneidelemente auf. Weiter kann das Aussengewinde mehrgängig ausgebildet sein, wobei vorteilhaft zumindest einer der Gewindegänge eine geringere Gewindehöhe als die parallel dazu verlaufenden weiteren Gewindegänge aufweist.

Das Profilierungselement kann im Bohrloch verbleiben und muss nach seiner Anwendung keine Kräfte übertragen. Es kann daher zu einer für die Anwendung ausreichenden Härte von mindestens 500 HV₁₀ (Härteprüfung nach Vikers mit einer Prüfkraft von 10 kp bzw. 100 N) wärmebehandelt werden, wobei dabei besondere Gefahren, wie beispielsweise die Gefahr einer Wasserstoffversprödung, nicht berücksichtigt werden müssen. Somit ist das Profilierungselement nicht nur einfach sondern auch kostengünstig herstellbar, was insbesondere bei einem Massenprodukt, wie es das erfindungsgemässe Profilierungselement darstellt, ein massgeblicher Vorteil ist.

Vorteilhafterweise ist das Reinigungselement an dem Ende des Schafts festgelegt beziehungsweise fest angeordnet, so dass dieses unverlierbar am Profilierungselement gehalten ist. Alternativ ist das Reinigungselement ein separates Teil, welches z. B. gekoppelt mit dem Profilierungselement beim Eintreiben desselben in das Bohrloch eingeschoben beziehungsweise mitgenommen wird.

Dem Anwender wird vorteilhaft ein Set bestehend aus zumindest einem erfindungsgemässen Profilierungselementes und einem Setzadapter zur Verfügung gestellt.

Vorzugsweise sind ein erstes Reinigungselement an dem zweiten Ende und ein zweites Reinigungselement an dem ersten Ende des Schafts des Profilierungselementes vorgesehen. Das erste an dem in Setzrichtung gesehene vordere Ende angeordnete Reinigungselement streift das an der Bohrlochwandung anhaftende Bohrmehl ab und schiebt das im Bohrloch vorhandene Bohrmehl und Bohrklein zum Bohrlochgrund vor. Das zweite, am bezogen auf die Setzrichtung hinteren Ende des Schafts streift beim Eintreiben des Profilierungselementes allfällig verbliebenes Bohrmehl von der Bohrlochwandung ab und schiebt zudem das beim Furchen der Hinterschneidung durch das gewindefurchende Element anfallende Bohrmehl und Bohrklein in Richtung des Bohrlochgrundes vor.

Alternativ ist das zweite Reinigungselement lösbar an dem Profilierungselement festgelegt oder lose mit diesem geführt, wobei das zweite Reinigungselement vorteilhaft von dem Setzwerkzeug beziehungsweise von dem Setzadapter beim Herausziehen derselben aus dem Bohrloch entfernt wird und dabei die Bohrlochwandung nochmals, dieses Mal in Richtung des Bohrlochmundes reinigt, was den Grad der Reinigung des Bohrlochs zusätzlich erhöht.

Auch das Setzwerkzeug und/oder der Setzadapter können mit zusätzlichen Reinigungselementen versehen sein, um den Grad der Reinigung des Bohrlochs weiter zu verbessern.

Bevorzugt ist das Reinigungselement radial umlaufend ausgebildet und überragt die axiale Projektion des Schaftes des Profilierungselementes derart, dass dieses beim Eintreiben des Profilierungselementes über die gesamte Eintreiblänge mit der Bohrlochwandung in Anlage steht. Das Reinigungselement ist z. B. ein Kreisring, dessen Aussendurchmesser grösser als der Nenndurchmesser des Bohrlochs ist.

In einer alternativen Ausführungsform ist das Reinigungselement scheibenförmig ausgebildet, wobei der Aussendurchmesser des Reinigungselementes grösser als der Nenndurchmesser des Bohrlochs gewählt ist. Vorteilhaft weist das Reinigungselement eine tellerförmige Ausgestaltung auf, wobei der dadurch geschaffene Aufnahmeraum vorteilhaft in Setzrichtung des Profilierungselementes ausgerichtet ist.

Vorzugsweise ist das Reinigungselement aus einem Kunststoff gefertigt, was eine einfache Fertigung und flexible Ausgestaltung des Reinigungselementes gewährleistet. Beispielsweise ist das Reinigungselement aus einem porösen Schaumstoff gefertigt, der einen Teil des anfallenden Bohrmehls in seinen Poren aufnehmen kann und somit die erforderliche Grösse des Aufnahmeraums vor dem Reinigungselement zur Aufnahme des anfallenden Bohrmehls und Bohrkleins im Bereich des Bohrlochgrundes reduziert.

In einer alternativen Ausführungsform ist das Reinigungselement aus Metall, z. B. aus einem Federblech oder aus Drahtstücken beziehungsweise Drahtbüscheln gefertigt.

Des Weiteren kann das Reinigungselement mehrere, vorteilhaft radial abragende Borstenanordnungen aus Kunststoff oder Metall umfassen, deren von der Aussenseite des Schafts gemessene Erstreckung grösser als der radiale Abstand zwischen der Aussenseite des Schafts bis zur Bohrlochwandung ist.

Weist das Reinigungselement mehr als ein Reinigungselement auf, können alle Reinigungselemente aus einem Material oder aus unterschiedlichem Material gefertigt sein. Je nach Wahl des Materials und der Ausgestaltung des Reinigungselementes wird der Grad der Bohrlochreinigung entsprechend beeinflusst.

Das erfindungsgemässe Verfahren zum Setzen eines chemisch verankerten Befestigungselementes mit einem erfindungsgemässen Profilierungselement umfasst als ersten Schritt das Bohren eines Bohrlochs in einen Untergrund, in dem das Befestigungselement verankert werden soll. Anschliessend wird das Profilierungselement in das Bohrloch eingetrieben, wobei die Bohrlochwandung mit einer spiralförmig verlaufenden Hinterscheidung versehen und gleichzeitig das an der Bohrlochwandung anhaftende sowie im Bohrloch vorhandene Bohrmehl und Bohrklein von dem Reinigungselement weitgehend vollständig vor dem Profilierungselement zum Bohrlochgrund hergeschoben wird. Dann erfolgt das Einbringen der aushärtbaren Masse in das Bohrloch und das Setzen des Befestigungselementes in das befüllte Bohrloch.

Weist das Setzwerkzeug oder der Setzadapter ebenfalls zumindest ein Reinigungselement auf, so wird beim Herausziehen des Setzwerkzeugs und/oder des Setzadapters ein Teil des Bohrmehls und Bohrkleins aus dem Bohrloch herausgefördert.

Vorzugsweise entspricht die minimale Bohrtiefe des Bohrlochs der Summe aus der vorbestimmten Verankerungslänge des Befestigungselementes in der aushärtbaren Masse und der Länge des Profilierungselementes, so dass das Profilierungselement im Bohrloch verbleiben kann und trotzdem eine ausreichende Verankerung des Befestigungselementes gewährleistet ist.

In einem weiteren Verfahrensschritt wird vor dem Einbringen der aushärtbaren Masse in das Bohrloch das Profilierungselement aus dem Bohrloch entfernt, wodurch eine grössere Verankerungslänge für das Befestigungselement in der aushärtbaren Masse insbesondere bei Untergründen mit einer beschränkten Bauteildicke zur Verfügung steht.

Die Erfindung wird nachstehend anhand von Ausführungsbeispielen näher erläutert. Es zeigen:
Fig. 1 Ein erstes Ausführungsbeispiel eines Profilierungselementes in Seitenansicht;
Fig. 2 ein zweites Ausführungsbeispiel eines Profilierungselementes im Schnitt mit einem Setzadapter; und
Fig. 3a-c ein erfindungsgemässes Setzverfahren in drei Teilschritten.

Grundsätzlich sind in den Figuren gleiche Teile mit den gleichen Bezugszeichen versehen.

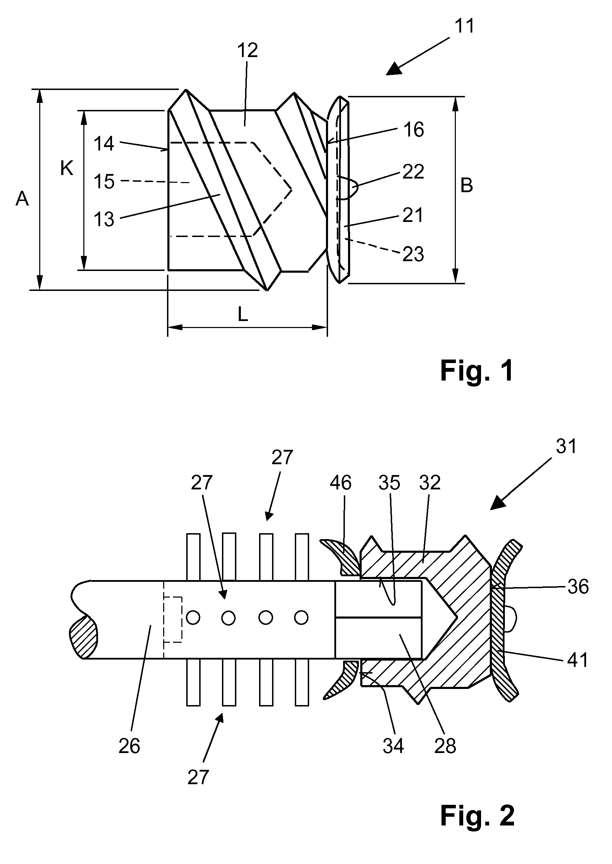

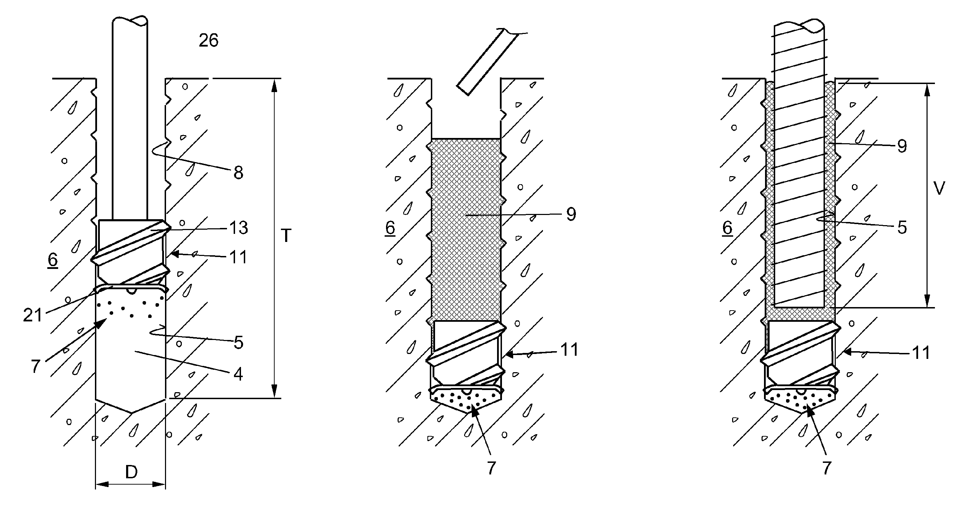

Das in der Figur 1 dargestellte Profilierungselement 11 weist einen Schaft 12 auf, der ein radial abragendes, gewindefurchendes Element 13 in Form eines Aussengewindes aufweist. An einem ersten Ende 14 des Schafts 12 ist als eine Drehmitnahme 15 für ein hier nicht dargestelltes Setzwerkzeug eine Sacklochbohrung mit einer Mehrkantaufnahme vorgesehen. An einem dem ersten Ende 14 gegenüberliegenden zweiten Ende 16 des Schafts 12 ist ein Reinigungselement 21 in Form einer aus einem Kunststoff gefertigten Scheibe vorgesehen, die über ein Fixiermittel 22 am Profilierungselement 11 festgelegt ist. Das Reinigungselement 21 weist eine tellerförmige Ausgestaltung auf, wobei die dadurch geschaffene Aufnahme 23 abgewandt von dem Profilierungselement 11 ist.

Die Länge L des Schafts 12 entspricht dem 1.0-fachen des Kerndurchmessers K des Schafts 12. Der Kerndurchmesser K des Schafts 12 entspricht dem 0.95-fachen des Nenndurchmessers D des Bohrlochs 4 (siehe Fig. 3a). Der Aussendurchmesser A des Aussengewindes entspricht dem 1.3-fachen des Kerndurchmessers K des Schafts 12. Der Aussendurchmesser B des Reinigungselementes 21 ist grösser als der Nenndurchmesser D des Bohrlochs 4 ausgebildet.

An dem in der Figur 2 gezeigten Profilierungselement 31 sind zwei Reinigungselemente 41 und 46 vorgesehen, wobei das erste Reinigungselement 41 am zweiten Ende 36 des Schafts 32 und das zweite Reinigungselement 46 am ersten Ende 34 des Schafts 32 angeordnet ist. Das erste Reinigungselement 41 weist ebenfalls eine tellerförmige Ausgestaltung auf und ist aus einem Kunststoff gefertigt. Das zweite Reinigungselement 46 ist als Kreisring ausgebildet und aus einem Metall gefertigt. Zudem können an dem Setzwerkzeug 26 noch zusätzlich Borstenanordnungen 27 vorgesehen sein, welche die Bohrlochwandung einer Nachreinigung unterziehen. Das Setzwerkzeug 26 ist mit einem entsprechend ausgebildeten Ende 28 mit der Drehmitnahme 35 lösbar kuppelbar. Über die geschaffene Kupplung kann das Profilierungselement 31 einfach mittels eines Eintreibwerkzeugs in das Bohrloch eingetrieben und gegebenenfalls wieder aus dem Bohrloch entfernt werden.

Das Setzwerkzeug 26 kann als Setzadapter ausgebildet sein, der bedarfsweise zwischen ein Setzwerkzeug ohne Reinigungselemente und dem Profilierungselement 11 anordnenbar ist. Ein derartiger Setzadapter ist in der Figur 2 mit einer gestrichelten Linie angedeutet.

Nachfolgend wird anhand der Figuren 3a bis 3c das erfindungsgemässe Verfahren zum Setzen eines chemisch verankerten Befestigungselementes 10 mit einem Profilierungselement 11 dargelegt. Wie in Figur 3a gezeigt, wird zuerst ein Bohrloch 4 mit dem Nenndurchmesser D in den Untergrund 6 erstellt, wobei die Tiefe T des Bohrlochs 4 zumindest der Summe aus der erforderlichen Verankerungslänge V des zu verankernden Befestigungselementes 10 in der aushärtbaren Masse 9 und der Länge L des Profilierungselementes 11 entspricht. Anschliessend wird das Profilierungselement 11 in das Bohrloch 4 über ein Setzwerkzeug 26 mittels einem hier nicht dargestellten Eintreibwerkzeug eingetrieben, wobei das Reinigungselement 21 entlang der Bohrlochwandung 5 streift und angefallenes Bohrmehl 7 in Richtung des Bohrlochgrundes des Bohrlochs 4 vor sich herschiebt. Gleichzeitig furcht das gewindefurchende Element 13 in Form eines Aussengewindes eine spiralförmige Hinterschneidung 8 in die Bohrlochwandung 5.

Wie in der Figur 3b dargestellt, wird das Profilierungselement 11 in dem Bohrloch 4 belassen und das vor dem Profilierungselement 11 beziehungsweise Reinigungselement 21 vorgeschobene Bohrmehl 7 und Bohrklein am Bohrlochgrund des Bohrlochs 4 gesammelt. Anschliessend wird eine entsprechende Menge einer aushärtbaren Masse 9 in das Bohrloch 4 eingebracht.

Wie Figur 3c zeigt, erfolgt anschliessend das Setzen des Befestigungselementes 10 in Form einer mit einem Aussengewinde als Profilierung versehenen Gewindestange in das befüllte Bohrloch 4, wobei die aushärtbare Masse 9 im Ringraum zwischen dem Befestigungselement 10 und der gefurchten Bohrlochwandung 5 hochsteigt. Nach dem Aushärten der aushärtbaren Masse 9 erfolgt eine Kraftübertragung über Formschlüsse der ausgehärteten Masse mit dem Befestigungselement 10 und mit dem Untergrund 6, einerseits über die Profilierung des Befestigungselementes 10 und andererseits über die Profilierung der Bohrlochwandung 5.

In einem alternativen Verfahrensschritt, beispielsweise bei Untergründen 6 mit einer geringen Bauteildicke, kann zur Reduktion der erforderlichen Bohrlochtiefe T das Profilierungselement 11 vor dem Einbringen der aushärtbaren Masse 9 in das Bohrloch 4 aus dem Bohrloch 4 entfernt werden.

## Patentansprüche

1. Profilierungselement zur Profilierung einer Bohrlochwandung mit einem Schaft (12; 32), der wenigstens ein radial abragendes, gewindefurchendes Element (13) sowie an einem ersten Ende (14; 34) eine Drehmitnahme (15; 35) für ein Setzwerkzeug (26) und ein dem ersten Ende (14; 34) gegenüberliegendes zweites Ende (16; 36) aufweist, **dadurch gekennzeichnet, dass**
ein Reinigungselement (21; 41, 46) an einem der Enden (16; 34, 36) des Schafts (12; 32) vorgesehen ist.

2. Profilierungselement nach Anspruch 1, **dadurch gekennzeichnet, dass** ein erstes Reinigungselement (41) an dem zweiten Ende (36) und ein zweites Reinigungselement (46) an dem ersten Ende (34) des Schafts (32) vorgesehen ist.

3. Profilierungselement nach Anspruch 1 oder 2, **dadurch gekennzeichnet, dass** das Reinigungselement (46) radial umlaufend ausgebildet ist.

4. Profilierungselement nach einem der Ansprüche 1 bis 3, **dadurch gekennzeichnet, dass** das Reinigungselement (21; 41) scheibenförmig ausgebildet ist.

5. Profilierungselement nach einem der Ansprüche 1 bis 4, **dadurch gekennzeichnet, dass** das Reinigungselement (21; 41) aus einem Kunststoff gefertigt ist.

6. Profilierungselement nach einem der Ansprüche 1 bis 4, **dadurch gekennzeichnet, dass** das Reinigungselement (46) aus Metall gefertigt ist.

7. Verfahren zum Setzen eines chemisch verankerten Befestigungselementes (10) mit einem Profilierungselementes (11) nach einem der Ansprüche 1 bis 6, umfassend die folgenden Schritte:
a) Bohren eines Bohrlochs (4) in einem Untergrund (6);
b) Eintreiben des Profilierungselementes (11) in das Bohrloch (4);
c) Einbringen der aushärtbaren Masse (9) in das Bohrloch (4); und
d) Setzen des Befestigungselementes (10) in das befüllte Bohrloch (4).

8. Verfahren nach Anspruch 7, **dadurch gekennzeichnet, dass** die minimale Bohrtiefe (T) des Bohrlochs (4) der Summe der vorbestimmten Verankerungslänge (V) des Befestigungselementes in der aushärtbaren Masse und der Länge (L) des Profilierungselementes (11) entspricht.

9. Verfahren nach Anspruch 7 oder 8, **dadurch gekennzeichnet, dass** vor dem Einbringen der aushärtbaren Masse (9) in das Bohrloch (4) das Profilierungselement (11) aus dem Bohrloch (4) entfernt wird.
